# FASCICULE DE BREVET EUROPEEN

(11) **EP 3 226 731 B1**
(45) Date de publication et mention de la délivrance du brevet: **24.10.2018**
(21) Numéro de dépôt: 15820216.8
(22) Date de dépôt: 01.12.2015
(51) Int. Cl.: A47J 37/06, A47J 43/07, A47J 36/16

(54) **APPAREIL DE CUISSON À AIR CHAUD**
HEISSLUFTKOCHVORRICHTUNG
HOT-AIR COOKING APPLIANCE

(30) Priorité: 02.12.2014 FR 1461775
(43) Date de publication de la demande: 11.10.2017
(73) Titulaire: SEB S.A., 69130 Ecully (FR)
(72) Inventeur: DELRUE, Olivier, 21260 Selongey (FR)
(74) Mandataire: Cémeli, Eric Philippe Laurent
(86) Numéro de dépôt international: PCT/FR2015/053288
(87) Numéro de publication internationale: WO 2016/087773

(56) Documents cités:
- WO-A1-2014/170589

## Description

La présente invention concerne de manière générale un appareil de cuisson à air chaud, tel qu'une friteuse agencée pour frire notamment des frites (pommes de terre en bâtons) sans les immerger de façon continue dans de l'huile.

Ces appareils comprennent généralement des moyens de brassage, tels qu'une pale par exemple, agencés pour brasser, retourner les aliments en cours de cuisson. Cependant, lors de la cuisson d'aliments fragiles, il faut prévoir de supprimer la rotation des moyens de brassage, tout en évitant de laisser ces aliments exposés de manière statique au flux d'air chaud.

Un tel appareil est divulgué par exemple dans le document EP 2 348 935 B1 ou dans le document EP 2 255 706 B1. Ces appareils comprennent des moyens de brassage qui sont entraînés en rotation par un arbre d'entraînement. Cependant, ces appareils sont complexes et peu pratiques à utiliser.

En effet, l'appareil divulgué par EP 2 348 935 B1 compte un panier avec des moyens de brassage et une cuve de cuisson distincte, ce qui augmente le coût total et oblige à stocker le panier hors de l'appareil lorsqu'on ne veut pas brasser les aliments.

Quant au document EP 2 255 706 B1, ce dernier divulgue un mécanisme d'entraînement à roue libre qui est complexe et couteux, tout en sachant qu'il faut prévoir de pouvoir faire tourner l'arbre d'entraînement dans deux sens de rotation opposés.

Le document WO 2014/170589 A1 divulgue un appareil de cuisson à air chaud comprenant une cuve de cuisson, des moyens de brassage amovibles agencés pour brasser des aliments présents dans la cuve de cuisson, des moyens d'entraînement des moyens de brassage lorsque ces derniers sont montés sur l'appareil de cuisson.

Un but de la présente invention est de répondre aux inconvénients des documents de l'art antérieur mentionnés ci-dessus et en particulier, tout d'abord, de proposer un appareil de cuisson à air chaud simple et aisé à utiliser pour cuire aussi bien des aliments devant être brassés que des aliments fragiles qu'il ne faut pas brasser.

Pour cela un premier aspect de l'invention concerne un appareil de cuisson à air chaud comprenant :
- une cuve de cuisson,
- des moyens de brassage amovibles agencés pour brasser des aliments présents dans la cuve de cuisson,
- des moyens d'entraînement des moyens de brassage lorsque ces derniers sont montés sur l'appareil de cuisson,
caractérisé en ce que l'appareil de cuisson comprend des moyens d'engagement, mobiles et agencés pour occuper :
- une première position, lorsque les moyens de brassage sont démontés de l'appareil de cuisson, dans laquelle les moyens d'engagement engagent les moyens d'entraînement avec la cuve de cuisson pour l'entraîner en rotation,
- une deuxième position, lorsque les moyens de brassage sont montés sur l'appareil de cuisson, dans laquelle la cuve de cuisson est déconnectée des moyens d'entraînement. L'appareil de cuisson selon l'invention est agencé pour recevoir les aliments fragiles ou non dans la même cuve de cuisson, ce qui limite le nombre de composants. Pour cuire des aliments fragiles, il suffit de retirer les moyens de brassage, tels qu'une pale de brassage par exemple. Pour éviter alors de laisser les aliments statiques par rapport au flux d'air lorsque les moyens de brassage sont retirés, l'appareil comprend des moyens d'engagement qui forcent l'engagement entre la cuve de cuisson et les moyens d'entraînement (une noix d'entraînement ou un arbre d'entrainement par exemple), afin que la cuve de cuisson tourne en rotation. Lorsque les aliments doivent être brassés, il suffit de monter les moyens de brassage sur l'appareil, ce qui déconnecte (ou dégage ou débraye) la cuve de cuisson des moyens d'entraînement.

Avantageusement, les moyens d'engagement sont agencés pour engager la cuve de cuisson avec une partie statique de l'appareil de cuisson lorsque les moyens d'engagement sont dans la deuxième position. La sécurité d'utilisation et l'efficacité de cuisson sont améliorées : aucun mouvement de la cuve de cuisson n'est possible lorsque les moyens de brassage sont montés sur l'appareil.

Avantageusement, les moyens d'engagement comprennent :
- un premier crabot mobile agencé pour engager la cuve de cuisson avec les moyens d'entraînement lorsque les moyens d'engagement sont dans la première position, et
- un deuxième crabot mobile, agencé pour engager la cuve de cuisson avec la partie statique de l'appareil de cuisson lorsque les moyens d'engagement sont dans la deuxième position. Les crabots mobiles sont typiquement montés sur l'appareil selon une liaison pivot glissante et coulissent et pivotent aisément de la première position à la deuxième position.

Avantageusement, l'un du premier crabot ou du deuxième crabot comprend des saillies agencées pour contacter l'autre du premier crabot ou du deuxième crabot afin de limiter la surface de contact entre les deux crabots. Ces saillies ou dômes limitent la surface de contact pour limiter les efforts de frottement entre les deux crabots.

Avantageusement, au moins l'un du premier crabot et du deuxième crabot est réalisé en matériau à faible coefficient de frottement, tel que du polytétrafluoroéthylène (PTFE).

Avantageusement, les moyens d'engagement comprennent au moins une première portion d'engagement, telle que des créneaux, agencée pour s'engager sur une longueur de prise avec la cuve de cuisson lorsque les moyens d'engagement sont dans la première position, ladite longueur de prise avec la cuve de cuisson étant d'une longueur inférieure à la distance parcourue par les moyens d'engagement de la première position à la deuxième position.

Avantageusement, les moyens d'engagement comprennent :
- au moins une deuxième portion d'engagement, telle que des ergots, agencée pour s'engager avec la cuve de cuisson lorsque les moyens d'engagement sont dans la deuxième position, et
- au moins une troisième portion d'engagement, telle que des créneaux, agencée pour s'engager sur une longueur de blocage avec la partie statique d'un boîtier de l'appareil de cuisson,
ladite longueur de blocage avec la partie statique étant d'une longueur inférieure à la distance parcourue par les moyens d'engagement de la première position à la deuxième position.

Avantageusement, la cuve de cuisson comprend un puits central, et un tube rapporté dans le puits central pour fournir une étanchéité à des aliments liquides contenus sur une hauteur déterminée de la cuve de cuisson, et le tube rapporté est agencé pour coopérer avec la première portion d'engagement et avec la deuxième portion d'engagement. Autrement dit, la cuve de cuisson peut rester simple à fabriquer : c'est sur le tube rapporté que l'on implante les interfaces d'engagement avec les moyens d'engagement.

Avantageusement, la cuve de cuisson comprend un récipient en métal et le tube rapporté est en matériau plastique. Dans le cas où les moyens d'engagement comprennent des créneaux, des saillies ou des renfoncements pour bloquer une rotation, les contre formes sur la cuve de cuisson sont aisées à implanter sur le tube rapporté, puisqu'on peut le fabriquer en moulage par exemple.

Avantageusement, les moyens d'engagement comprennent des moyens de rappel automatique, tels que des moyens élastiques, agencés pour placer automatiquement les moyens d'engagement dans la première position lors d'un mouvement de démontage des moyens de brassage sur l'appareil de cuisson et/ou lorsque les moyens de brassage sont absents de l'appareil de cuisson. On peut prévoir un ressort de compression aisément implantable autour des moyens d'entraînement.

Avantageusement, les moyens de brassage sont agencés pour positionner les moyens d'engagement dans la deuxième position, lors d'un mouvement de montage des moyens de brassage sur l'appareil de cuisson. L'utilisation est particulièrement aisée, puisque ce sont les moyens de brassage qui vont directement pousser les moyens d'engagement dans la deuxième position. L'utilisateur n'a aucune opération particulière à effectuer.

Un deuxième aspect de l'invention concerne un procédé de mise en configuration d'un appareil de cuisson à air chaud comprenant :
- une cuve de cuisson,
- des moyens de brassage amovibles agencés pour brasser des aliments présents dans la cuve de cuisson,
- des moyens d'entraînement des moyens de brassage lorsque ces derniers sont montés sur l'appareil de cuisson,
- des moyens d'engagement mobiles,
le procédé comprenant les étapes consistant à :
- positionner les moyens d'engagement dans :
- une première position, lorsque les moyens de brassage sont démontés de l'appareil de cuisson, pour engager les moyens d'entraînement avec la cuve de cuisson pour l'entraîner en rotation, ou
- une deuxième position, lorsque les moyens de brassage sont montés sur l'appareil de cuisson, pour déconnecter la cuve de cuisson des moyens d'entraînement.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une coupe partielle d'un appareil de cuisson selon l'invention, qui comprend une cuve de cuisson, des moyens de brassage, et des moyens d'entraînement ;
- la figure 2 représente un détail de l'appareil de cuisson de la figure 1, au niveau de l'accouplement des moyens de brassage avec les moyens d'entraînement ;
- la figure 3 représente le détail de la figure 2, sans les moyens de brassage ;
- la figure 4 représente en détail un premier crabot mobile visible sur les figures précédentes ;
- la figure 5 représente en détail un deuxième crabot mobile visible sur les figures précédentes.

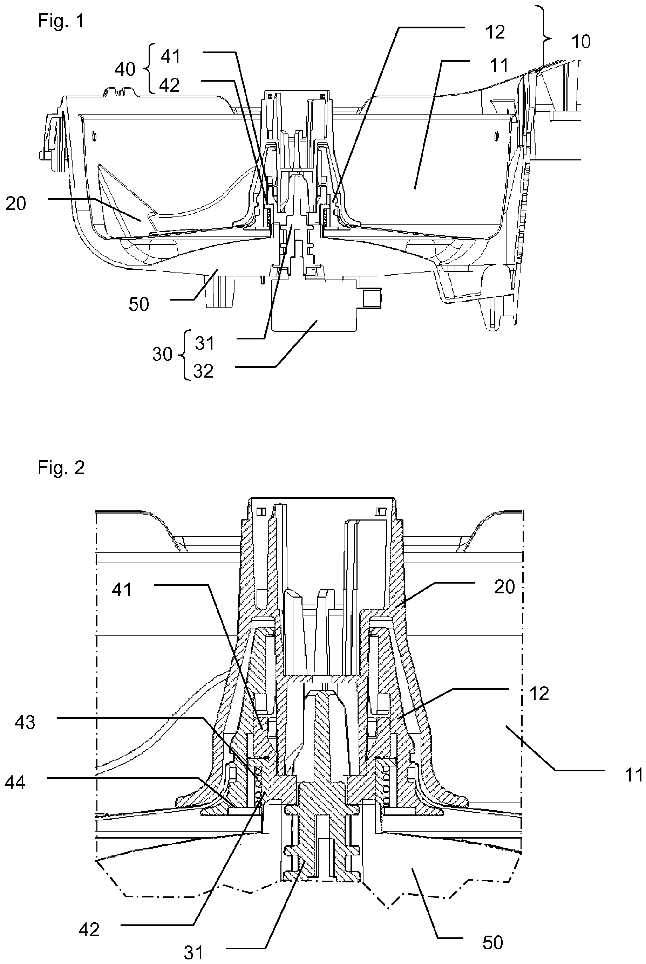

La figure 1 représente une coupe partielle d'un appareil de cuisson à air chaud selon l'invention. L'appareil de cuisson comprend une cuve de cuisson 10 composée d'un récipient 11 en tôle par exemple, et d'un tube rapporté 12, en plastique par exemple. Le tube rapporté 12 est emmanché de manière étanche dans un trou central du récipient 11 et forme ainsi un puits qui permet de verser du liquide dans la cuve de cuisson 10. L'appareil de cuisson comprend un boîtier 50 qui supporte la cuve de cuisson 10, un moteur électrique 32 et les autres composants de l'appareil de cuisson.

Des moyens de brassage 20 sont montés sur l'appareil de cuisson pour remuer, brasser et/ou retourner des aliments à cuire qui sont placés dans la cuve de cuisson 10. Les moyens de brassage 20 sont une pale de brassage, et ils sont amovibles par rapport à l'appareil de cuisson, et également par rapport à la cuve de cuisson 10. L'utilisateur peut monter les moyens de brassage 20 sur l'appareil de cuisson en les enfilant sur le puits formé par le tube rapporté 12, jusqu'à les accoupler avec une noix formée en bout d'un arbre d'entraînement 31 qui est lui-même accouplé au moteur électrique 32.

L'arbre d'entraînement 31 et le moteur électrique 32 forment des moyens d'entraînement en rotation des moyens de brassage 20. Selon la mise en oeuvre représentée figure 1, les moyens de brassage sont directement engagés avec des moyens d'entraînement 30, c'est-à-dire que les moyens de brassage 20 sont directement engagés sur la noix d'entraînement en bout de l'arbre d'entraînement 31. La noix d'entraînement en question comprend quatre nervures et les moyens de brassage comprennent alors quatre cannelures qui s'engagent sur les nervures de la noix d'entraînement.

L'appareil de cuisson comprend également des moyens d'engagement 40 avec notamment un premier crabot 41 et un deuxième crabot 42, tous deux mobiles en rotation et en coulissement par rapport à l'axe de rotation de l'arbre d'entraînement 31.

En effet, l'appareil selon l'invention propose de pouvoir brasser les aliments dans la cuve de cuisson lorsque cela est nécessaire (pour cuire des frites par exemple). La cuve de cuisson 10 est alors statique. D'autre part, lorsque les aliments sont fragiles (comme du poisson par exemple), il est possible de retirer les moyens de brassage de l'appareil de cuisson, et dans ce cas, c'est la cuve de cuisson 10 qui tourne en rotation, pour éviter que les aliments restent statiques par rapport au flux d'air chaud.

Ici sur la figure 1, les moyens de brassage 20 sont montés, et le deuxième crabot mobile 42 engage la cuve de cuisson 10 avec le boîtier 50 qui est une partie statique de l'appareil de cuisson. Ainsi, la cuisson est efficace et sécurisée, car la cuve de cuisson ne peut pas tourner en rotation, comme cela sera expliqué en détail ci-dessous.

La figure 2 représente en détail la zone centrale de la figure 1, au niveau de la noix d'entraînement de l'arbre d'entraînement 31. Les moyens de brassage sont montés sur l'appareil de cuisson, et sont directement engagés sur les nervures de l'arbre d'entraînement.

Le premier crabot 41 mobile et le deuxième crabot 42 mobile sont pris entre des moyens élastiques, un ressort 43 qui les pousse vers le haut, et les moyens de brassage 20. Ce sont ces derniers qui positionnent les moyens d'engagement (le premier crabot 41 et le deuxième crabot 42) vers le bas.

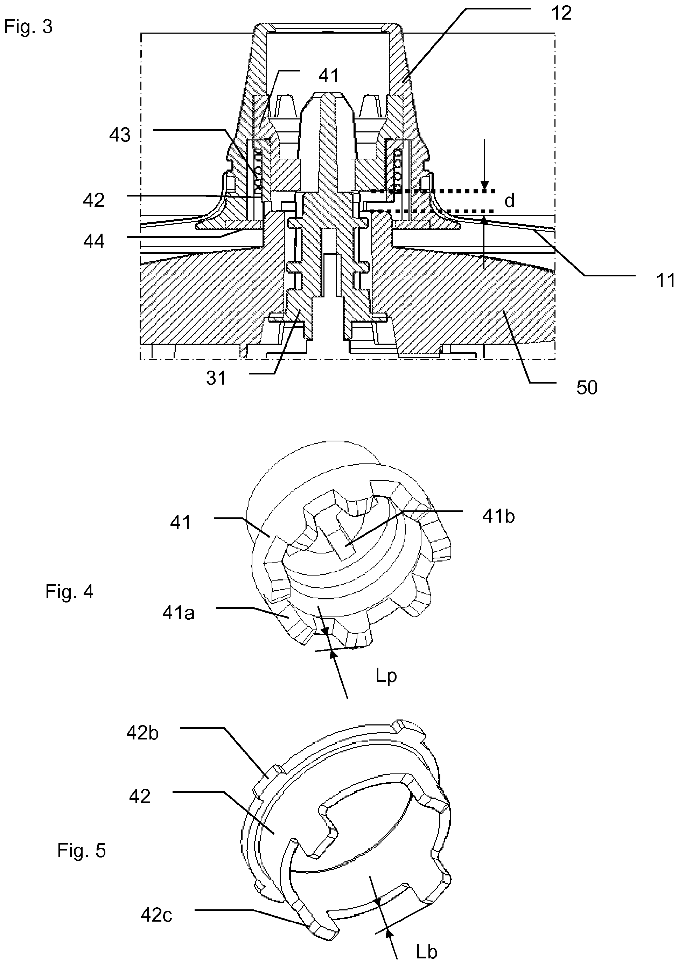

En se référant à la figure 5, le deuxième crabot 42 comprend :
- des ergots 42b qui sont agencées dans des rainures du tube rapporté 12,
- des créneaux 42c qui s'engagent dans des rainures du boîtier 50, qui est statique. Ainsi, la cuve de cuisson 10 est solidaire du boîtier 50 et ne peut pas bouger par rapport à ce dernier.

En se référant à la figure 4, le premier crabot 41 comprend :
- des créneaux 41a qui ne sont pas engagés dans des formes correspondantes du tube rapporté 12,
- des rainures 41b qui elles sont engagées sur les nervures de la noix d'entraînement de l'arbre d'entraînement 31.

En conséquence, en se référant à la configuration de l'appareil de la figure 2, le premier crabot 41 est entrainé en rotation par l'arbre d'entrainement 31, et le deuxième crabot 42 est quant à lui statique. Il y a donc mouvement relatif entre les deux crabots, et pour limiter les frottements et surfaces en contact entre ces deux pièces, des dômes sont agencés sur le deuxième crabot 42, entre ce dernier et le premier crabot 41.

On peut envisager de supprimer ce mouvement relatif, en supprimant les nervures de l'arbre d'entraînement 31 à la hauteur des rainures 41b du premier crabot 41. Ce dernier pourra rester statique dans cette position.

La figure 3 représente la zone de l'appareil représentée figure 2, mais sans les moyens de brassage. L'appareil de cuisson est donc mis en configuration de cuisson pour des aliments fragiles, sans les moyens de brassage 20. Dès que les moyens de brassage 20 sont démontés de l'appareil de cuisson, le premier crabot 41 et le deuxième crabot 42 sont repoussés vers le haut sur une distance d par le ressort 43, qui appuie sur une rondelle 44 en appui sur le boîtier 50.

Dans cette position, le deuxième crabot 42 n'est plus engagé avec le boîtier 50 car la longueur de blocage Lb des créneaux 42c est inférieure à la distance d parcourue par les crabots lors du démontage des moyens de brassage. La cuve de cuisson 10 n'est donc plus engagée ni solidaire du boîtier 50.

D'autre part, le premier crabot 41 est remonté également de la distance d, de sorte que les créneaux 41a d'une longueur de prise Lp se sont engagés dans le tube rapporté 12. En conséquence, la cuve de cuisson 10 est engagée avec les moyens d'entraînement 30, pour être entraînée en rotation.

En conclusion, l'invention propose des moyens d'engagement (le premier crabot 41 et le deuxième crabot 42) qui peuvent occuper une première position (figure 3), lorsque les moyens de brassage sont démontés de l'appareil, dans laquelle la cuve de cuisson 10 est engagée avec l'arbre d'entraînement 31.

D'autre part, les moyens d'engagement peuvent occuper une deuxième position dans laquelle la cuve de cuisson est statique, les moyens de brassage 20 étant montés sur l'appareil et maintenant les moyens d'engagement dans la deuxième position.

Les créneaux 41a sont une première portion d'engagement, mais on peut envisager des solutions avec des index qui s'engagent dans des trous, des ergots ou des formes avec des arêtes ou de section non circulaire qui procurent un arrêt en rotation.

Les ergots 42b sont une deuxième portion d'engagement, mais on peut envisager des solutions avec des index qui s'engagent dans des trous, des ergots ou des formes avec des arêtes ou de section non circulaire qui procurent un arrêt en rotation.

Les créneaux 42c sont une troisième portion d'engagement, mais on peut envisager des solutions avec des index qui s'engagent dans des trous, des ergots ou des formes avec des arêtes ou de section non circulaire qui procurent un arrêt en rotation.

On peut envisager une mise en oeuvre dans laquelle la cuve de cuisson est statique, même lorsque les moyens de brassage 20 sont démontés de l'appareil, avec par exemple un arbre qui s'insérerait dans le tube rapporté 12 pour pousser les moyens d'engagement dans la deuxième position.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de cuisson à air chaud comprenant :
- une cuve de cuisson (10),
- des moyens de brassage (20) amovibles agencés pour brasser des aliments présents dans la cuve de cuisson (10),
- des moyens d'entraînement (30) des moyens de brassage (20) lorsque ces derniers sont montés sur l'appareil de cuisson,
**caractérisé en ce que** l'appareil de cuisson comprend des moyens d'engagement (40), mobiles et agencés pour occuper :
- une première position, lorsque les moyens de brassage (20) sont démontés de l'appareil de cuisson, dans laquelle les moyens d'engagement engagent les moyens d'entraînement (30) avec la cuve de cuisson (10) pour l'entraîner en rotation,
- une deuxième position, lorsque les moyens de brassage (20) sont montés sur l'appareil de cuisson, dans laquelle la cuve de cuisson (10) est déconnectée des moyens d'entraînement (30).

2. Appareil de cuisson selon la revendication précédente, **caractérisé en ce que** les moyens d'engagement (40) sont agencés pour engager la cuve de cuisson (10) avec une partie statique de l'appareil de cuisson lorsque les moyens d'engagement (40) sont dans la deuxième position.

3. Appareil de cuisson selon la revendication précédente, dans lequel les moyens d'engagement (40) comprennent :
- un premier crabot (41) mobile agencé pour engager la cuve de cuisson (10) avec les moyens d'entraînement (30) lorsque les moyens d'engagement (40) sont dans la première position, et
- un deuxième crabot (42) mobile, agencé pour engager la cuve de cuisson (10) avec la partie statique de l'appareil de cuisson lorsque les moyens d'engagement (40) sont dans la deuxième position.

4. Appareil de cuisson selon la revendication précédente, dans lequel au moins l'un du premier crabot (41) et du deuxième crabot (42) est réalisé en matériau à faible coefficient de frottement, tel que du polytétrafluoroéthylène (PTFE).

5. Appareil de cuisson selon l'une des revendications 3 ou 4, dans lequel l'un du premier crabot (41) ou du deuxième crabot (42) comprend des saillies agencées pour contacter l'autre du premier crabot (41) ou du deuxième crabot (42) afin de limiter la surface de contact entre les deux crabots.

6. Appareil de cuisson selon l'une des revendications précédentes, dans lequel les moyens d'engagement (40) comprennent au moins une première portion d'engagement, telle que des créneaux, agencée pour s'engager sur une longueur de prise (Lp) avec la cuve de cuisson (10) lorsque les moyens d'engagement (40) sont dans la première position, ladite longueur de prise (Lp) avec la cuve de cuisson (10) étant d'une longueur inférieure à la distance (d) parcourue par les moyens d'engagement (40) de la première position à la deuxième position.

7. Appareil de cuisson selon la revendication précédente, dans lequel les moyens d'engagement (40) comprennent :
- au moins une deuxième portion d'engagement, telle que des ergots, agencée pour s'engager avec la cuve de cuisson (10) lorsque les moyens d'engagement (40) sont dans la deuxième position, et
- au moins une troisième portion d'engagement, telle que des créneaux, agencée pour s'engager sur une longueur de blocage (Lb) avec la partie statique d'un boîtier de l'appareil de cuisson,
ladite longueur de blocage (Lb) avec la partie statique étant d'une longueur inférieure à la distance (d) parcourue par les moyens d'engagement (40) de la première position à la deuxième position.

8. Appareil de cuisson selon l'une des revendications précédentes, dans lequel la cuve de cuisson (10) comprend un puits central, et un tube rapporté (12) dans le puits central pour fournir une étanchéité à des aliments liquides contenus sur une hauteur déterminée de la cuve de cuisson (10), dans lequel le tube rapporté (12) est agencé pour coopérer avec la première portion d'engagement et avec la deuxième portion d'engagement.

9. Appareil de cuisson selon la revendication précédente, dans lequel la cuve de cuisson (10) comprend un récipient (11) en métal et le tube rapporté (12) est en matériau plastique

10. Appareil de cuisson selon l'une des revendications précédentes, **caractérisé en ce que** les moyens d'engagement (40) comprennent des moyens de rappel automatique, tels que des moyens élastiques, agencés pour placer automatiquement les moyens d'engagement (40) dans la première position lors d'un mouvement de démontage des moyens de brassage (20) sur l'appareil de cuisson et/ou lorsque les moyens de brassage (20) sont absents de l'appareil de cuisson.

11. Appareil de cuisson selon l'une des revendications précédentes, dans lequel les moyens de brassage (20) sont agencés pour positionner les moyens d'engagement (40) dans la deuxième position, lors d'un mouvement de montage des moyens de brassage (20) sur l'appareil de cuisson.

12. Procédé de mise en configuration d'un appareil de cuisson à air chaud comprenant :
- une cuve de cuisson (10),
- des moyens de brassage (20) amovibles agencés pour brasser des aliments présents dans la cuve de cuisson (10),
- des moyens d'entraînement (30) des moyens de brassage (20) lorsque ces derniers sont montés sur l'appareil de cuisson,
- des moyens d'engagement (40) mobiles,
le procédé comprenant les étapes consistant à :
- positionner les moyens d'engagement dans :
- une première position, lorsque les moyens de brassage (20) sont démontés de l'appareil de cuisson, pour engager les moyens d'entraînement (30) avec la cuve de cuisson (10) pour l'entraîner en rotation, ou
- une deuxième position, lorsque les moyens de brassage (20) sont montés sur l'appareil de cuisson, pour déconnecter la cuve de cuisson (10) des moyens d'entraînement (30).

## Patentansprüche

1. Heißluft-Kochgerät, umfassend:
- ein Kochgefäß (10),
- abnehmbare Mischvorrichtungen (20), die zum Vermischen von im Kochgefäß (10) vorhandenen Lebensmitteln ausgelegt sind,
- Mitnahmemittel (30) für die Mischvorrichtungen (20), wenn letztere auf dem Kochgerät montiert sind,
**dadurch gekennzeichnet, dass** das Kochgerät Einrastvorrichtungen (40) umfasst, die mobil und für die folgenden Stellungen ausgelegt sind:
- eine erste Position, wenn die Mischvorrichtungen (20) vom Kochgerät abmontiert sind, in der die Einrastvorrichtungen die Mitnahmemittel (30) mit dem Kochgefäß (10) einrasten lassen, um es in Drehung zu versetzen,
- eine zweite Position, wenn die Mischvorrichtungen (20) auf dem Kochgerät montiert sind, in der das Kochgefäß (10) von den Mitnahmemitteln (30) abgetrennt ist.

2. Kochgerät nach dem vorstehenden Anspruch, **dadurch gekennzeichnet, dass** die Einrastvorrichtungen (40) so ausgelegt sind, dass das Kochgefäß (10) mit einem statischen Teil des Kochgeräts einrastet, wenn die Einrastvorrichtungen (40) sich in der zweiten Position befinden.

3. Kochgerät nach dem vorstehenden Anspruch, in dem die Einrastvorrichtungen (40) Folgendes umfassen:
- eine erste mobile Klaue (41), die so ausgelegt ist, dass sie das Kochgefäß (10) mit den Mitnahmemitteln (30) einrasten lässt, wenn die Einrastvorrichtungen (40) sich in der ersten Position befinden, und
- eine zweite mobile Klaue (42), die so ausgelegt ist, dass sie das Kochgefäß (10) mit dem statischen Teil des Kochgeräts einrasten lässt, wenn die Einrastvorrichtungen (40) sich in der zweiten Position befinden.

4. Kochgerät nach dem vorstehenden Anspruch, in dem mindestens eines aus erster Klaue (41) und zweiter Klaue (42) aus einem Material mit niedrigem Reibungskoeffizient gefertigt ist, wie Polytetrafluoroethylen (PTFE).

5. Kochgerät nach einem der Ansprüche 3 oder 4, in dem eine erste Klaue (41) oder eine zweite Klaue (42) Vorsprünge enthält, die so ausgelegt sind, dass die jeweils andere aus erster Klaue (41) oder zweiter Klaue (42) kontaktiert wird, um die Kontaktfläche zwischen den zwei Klauen zu begrenzen.

6. Kochgerät nach einem der vorstehenden Ansprüche, in dem die Einrastvorrichtungen (40) mindestens einen ersten Einrastabschnitt umfassen, wie Slots, der so ausgelegt ist, dass er auf einer Einspannlänge (Lp) mit dem Kochgefäß (10) einrastet, wenn die Einrastvorrichtungen (40) sich in der ersten Position befinden, wobei die Einspannlänge (Lp) mit dem Kochgefäß (10) kleiner als der von den Einrastvorrichtungen (40) zwischen der ersten und der zweiten Position zurückgelegte Weg (d) ist.

7. Kochgerät nach dem vorstehenden Anspruch, in dem die Einrastvorrichtungen (40) Folgendes umfassen:
- mindestens einen zweiten Einrastabschnitt, wie Nasen, der so ausgelegt ist, dass er mit dem Kochgefäß (10) einrastet, wenn die Einrastvorrichtungen (40) sich in der zweiten Position befinden, und
- mindestens einen dritten Einrastabschnitt, wie Slots, der so ausgelegt ist, dass er auf einer Blockierlänge (Lb) mit dem statischen Teil eines Gehäuses des Kochgeräts einrastet,
wobei die Blockierlänge (Lb) mit dem statischen Teil kleiner als der von den Einrastvorrichtungen (40) zwischen der ersten und der zweiten Position zurückgelegte Weg (d) ist.

8. Kochgerät nach einem der vorstehenden Ansprüche, in dem das Kochgefäß (10) eine zentrale Vertiefung und ein angesetztes Rohr (12) in der zentralen Vertiefung besitzt, um flüssigen Lebensmitteln, die sich auf einer bestimmten Höhe des Kochgefäßes (10) befinden Dichtigkeit zu bieten, wobei das angesetzte Rohr (12) so ausgelegt ist, dass es mit dem ersten Einrastabschnitt und dem zweiten Einrastabschnitt zusammenarbeitet.

9. Kochgerät nach dem vorstehenden Anspruch, in dem das Kochgefäß (10) einen Metallbehälter (11) enthält und das angesetzte Rohr (12) aus Kunststoff ist.

10. Kochgerät nach einem der vorstehenden Ansprüche, **dadurch gekennzeichnet, dass** die Einrastvorrichtungen (40) automatische Rückstellmittel enthalten, wie elastische Mittel, die so ausgelegt sind, dass die Einrastvorrichtungen (40) automatisch in die Ausgangsstellung zurückgebracht werden, wenn eine Demontagebewegung der Mischvorrichtungen (20) am Kochgerät erfolgt und/oder die Mischvorrichtungen (20) nicht am Kochgerät vorhanden sind.

11. Kochgerät nach einem der vorstehenden Ansprüche, in dem die Mischvorrichtungen (20) so ausgelegt sind, dass die Einrastvorrichtungen (40) in der zweiten Position positioniert werden, wenn eine Montagebewegung der Mischvorrichtungen (20) am Kochgerät erfolgt.

12. Konfigurationsverfahren eines Heißluft-Kochgeräts, umfassend:
- ein Kochgefäß (10),
- abnehmbare Mischvorrichtungen (20), die zum Vermischen von im Kochgefäß (10) vorhandenen Lebensmitteln ausgelegt sind,
- Mitnahmemittel (30) für die Mischvorrichtungen (20), wenn letztere auf dem Kochgerät montiert sind,
- mobile Einrastvorrichtungen (40),
wobei das Verfahren, die folgenden Schritte umfasst:
- Positionieren der Einrastvorrichtungen in:
- einer ersten Position, wenn die Mischvorrichtungen (20) vom Kochgerät abmontiert sind, in der die Einrastvorrichtungen die Mitnahmemittel (30) mit dem Kochgefäß (10) einrasten lassen, um es in Drehung zu versetzen, oder
- einer zweiten Position, wenn die Mischvorrichtungen (20) auf dem Kochgerät montiert sind, um das Kochgefäß (10) von den Mitnahmemitteln (30) abzutrennen.

## Claims

1. Hot-air cooking appliance comprising:
- a cooking vessel (10),
- removable stirring means (20) arranged for stirring food presents in the cooking vessel (10),
- means for driving (30) the stirring means (20) when the latter are mounted on the cooking appliance,
**characterised in that** the cooking appliance comprises engagement means (40), that are movable and designed to take up:
- a first position, when the stirring means (20) are removed from the cooking appliance, in which the engagement means engage the driving means (30) with the cooking vessel (10) to drive it in rotation,
- a second position, when the stirring means (20) are mounted on the cooking appliance, in which the cooking vessel (10) is disconnected from the driving means (30).

2. Cooking appliance as claimed in the preceding claim, **characterised in that** the engagement means (40) are arranged to engage the cooking vessel (10) with a static portion of the cooking appliance when the engagement means (40) are in the second position.

3. Cooking appliance as claimed in the preceding claim, wherein the engagement means (40) comprise:
- a first movable dog clutch (41) arranged to engage the cooking vessel (10) with the driving means (30) when the engagement means (40) are in the first position, and
- a second movable dog clutch (42), arranged to engage the cooking vessel (10) with the static portion of the cooking appliance when the engagement means (40) are in the second position.

4. Cooking appliance as claimed in the preceding claim, wherein at least one from the first dog clutch (41) and from the second dog clutch (42) is made from a material with a low friction coefficient, such as polytetrafluoroethylene (PTFE).

5. Cooking appliance according to one of claims 3 or 4, wherein one from the first dog clutch (41) or from the second dog clutch (42) comprises protrusions arranged to contact the other of the first dog clutch (41) or of the second dog clutch (42) in order to limit the contact surface between the two dog clutches.

6. Cooking appliance according to one of the preceding claims, wherein the engagement means (40) comprise at least one first engagement portion, such as slots, arranged to engage over a catching length (Lp) with the cooking vessel (10) when the engagement means (40) are in the first position, said catching length (Lp) with the cooking vessel (10) being of a length less than the distance (d) travelled by the engagement means (40) from the first position to the second position.

7. Cooking appliance as claimed in the preceding claim, wherein the engagement means (40) comprise:
- at least one second engagement portion, such as lugs, arranged to engage with the cooking vessel (10) when the engagement means (40) are in the second position, and
- at least one third engagement portion, such as slots, arranged to engage over a blocking length (Lb) with the static portion of a case of the cooking appliance,
said blocking length (Lb) with the static portion being of a length less than the distance (d) travelled by the engagement means (40) from the first position to the second position.

8. Cooking appliance according to one of the preceding claims, wherein the cooking vessel (10) comprises a central well, and an added tube (12) in the central well to provide a seal for liquid food contained over a predetermined height of the cooking vessel (10), wherein the added tube (12) is arranged to cooperate with the first engagement portion and with the second engagement portion.

9. Cooking appliance as claimed in the preceding claim, wherein the cooking vessel (10) comprises a recipient (11) made of metal and the added tube (12) is made from plastic material

10. Cooking appliance according to one of the preceding claims, **characterised in that** the engagement means (40) comprise automatic means of return, such as elastic means, arranged to automatically place the engagement means (40) in the first position during a removal movement of the stirring means (20) on the cooking appliance and/or when the stirring means (20) are absents from the cooking appliance.

11. Cooking appliance according to one of the preceding claims, wherein the stirring means (20) are arranged to position the engagement means (40) in the second position, during a mounting movement of the stirring means (20) on the cooking appliance.

12. Method for configuring a hot-air cooking appliance comprising:
- a cooking vessel (10),
- removable stirring means (20) arranged for stirring food presents in the cooking vessel (10),
- means for driving (30) the stirring means (20) when the latter are mounted on the cooking appliance,
- movable engagement means (40),
with the method comprising the steps consisting in:
- positioning the engagement means in:
- a first position, when the stirring means (20) are removed from the cooking appliance, in order to engage the driving means (30) with the cooking vessel (10) to drive it in rotation, or
- a second position, when the stirring means (20) are mounted on the cooking appliance, in order to disconnect the cooking vessel (10) from the driving means (30).
